# EUROPÄISCHE PATENTSCHRIFT

(11) **EP 2 638 114 B1**
(45) Veröffentlichungstag und Bekanntmachung des Hinweises auf die Patenterteilung: **27.04.2016**
(21) Anmeldenummer: 11781466.5
(22) Anmeldetag: 24.10.2011
(51) Int. Cl.: C09C 1/30, C09D 7/12, C08K 5/5419, C08K 3/36, C09D 5/02

(54) **HYDROPHOBIERTE SILICIUMDIOXIDPARTIKEL ENTHALTENDE DISPERSION UND LACKZUBEREITUNG**
DISPERSION COMPRISING HYDROPHOBIZED SILICON DIOXIDE PARTICLES, AND PAINT PREPARATION
DISPERSION ET PRÉPARATION POUR LAQUE CONTENANT DES PARTICULES HYDROFUGÉES DE DIOXYDE DE SILICIUM

(30) Priorität: 10.11.2010 DE 102010043721
(43) Veröffentlichungstag der Anmeldung: 18.09.2013
(73) Patentinhaber: Evonik Degussa GmbH, 45128 Essen (DE)
(72) Erfinder: MICHAEL, Günther, 63791 Karlstein (DE); LORTZ, Wolfgang, 63607 Wächtersbach (DE); LADWIG, Thorsten, 63512 Hainburg (DE); GROSS, Tina, 36396 Steinau (DE)
(86) Internationale Anmeldenummer: PCT/EP2011/068526
(87) Internationale Veröffentlichungsnummer: WO 2012/062559

(56) Entgegenhaltungen:
- EP-A1- 2 107 086
- US-A1- 2007 145 327
- TOHREN C. G. KIBBEY ET AL: "A Multicomponent Analysis of the Sorption of Polydisperse Ethoxylated Nonionic Surfactants to Aquifer Materials: Equilibrium Sorption Behavior", ENVIRONMENTAL SCIENCE & TECHNOLOGY, Bd. 31, Nr. 4, 1. April 1997 (1997-04-01), Seiten 1171-1177, XP55016448, ISSN: 0013-936X, DOI: 10.1021/es960681r

## Beschreibung

Die Erfindung betrifft eine wässerige Dispersion und eine Lackzubereitung, welche hydrophobierte Siliciumdioxidpartikel enthalten.

Wichtige Punkte bei der Herstellung von Dispersionen sind:
i. eine gute Benetzung der Füllstoffe und Pigmente während der Einarbeitung. Dadurch können die Dispergierzeiten und der Eintrag an Dispergierenergie reduziert werden;
ii. oftmals ist eine möglichst geringe Viskosität der Dispersionen erwünscht;
iii. nach Abtrocknung soll ein hoher Glanzgrad erzielt werden;
iv. die Absetzneigung der festen Phase der Dispersion soll minimal sein, auch bei Langzeitlagerung, Transport über große Entfernungen und bei extremer klimatischer Belastung;
v. es soll keine Flokkulation in der Dispersion auftreten. Dies ist von besonderer Bedeutung bei der Herstellung reproduzierbarer Farbtöne bei Verwendung von heute üblichen Farbmischmaschinen;
vi. die Dispersion soll mit einer Vielzahl von Additiven verträglich sein.

Um diesen Punkten gerecht zu werden, werden in der Regel Dispergiermittel der Dispersion zugesetzt. Dazu wurde bereits eine Vielzahl von wasserlöslichen Dispergiermitteln vorgeschlagen, Beispielsweise Dispergiermittel auf Basis ionischer Strukturen, wie Polyphosphate oder amphiphilen Strukturen, das heißt, mit definierten hydrophoben und hydrophilen Blöcken, auf Basis von nichtionischen Fettalkohol- oder Alkylphenolethoxylaten bzw. deren anionisch modifizierten Derivaten.

Dennoch sind bislang nur wenige hochgefüllte, niedrigviskose, stabile wässerige Dispersionen bekannt, die hydrophobierte Siliciumdioxidpartikel enthalten. Hochgefüllte Dispersionen sind erwünscht, weil dadurch die Transportkosten gesenkt werden können und weil bei der Einarbeitung in hochgefüllte Lackdispersionen, diese nicht wieder mit stark wasserhaltigen Produkten verdünnt werden sollen.

In DE-A-10316661 wird eine hochgefüllte, niedrigviskose Dispersion offenbart, die 5 - 50 Gew.-% hydrophobierte Siliciumdioxidpartikel und ein Dispergiermittel der allgemeinen Formel R¹CO₂(CH₂CH(Ph)O)ₐ(CₙH₂ₙ₋ₓR²ₓO)_{b}R³ enthält. Diese Dispersion führt in der Anwendung jedoch nur zu nur mäßig dauerhaften Beschichtungen.

In EP-A-2107086 wird eine wässerige Dispersion offenbart, die hydrophobierte Siliciumdioxidpartikel, wenigstens einen Phosphatester eines ethoxylierten Alkohols und eine basisch wirkende Zusammensetzung enthält. Es hat sich nun gezeigt, dass Lackformulierungen, die diese Dispersion enthalten, nur dann gute Ergebnisse zeigen, wenn die Dispersion nennenswerte Mengen an N-Methylpyrrolidon enthält. N-Methylpyrrolidon ist aufgrund seiner Toxizität jedoch ein unerwünschter Bestandteil in Lackformulierungen.

Die technische Aufgabe der Erfindung war es daher, eine stabile Dispersion bereitzustellen, die nur einen geringen Anteil an N-Methylpyrrolidon aufweist oder gänzlich frei davon ist, und die dennoch eine niedrige Viskosität bei hoher Feststoffbeladung erlaubt. Sie soll ferner eine rasche Einarbeitung in wässerige Lackformulierungen ermöglichen, eine gute Lagerstabilität aufweisen und den Aufbau einer Strukturviskosität in der Lackformulierung ermöglichen.

Gegenstand der Erfindung ist eine wässerige, hydrophobierte Siliciumdioxidpartikel enthaltende Dispersion, welche
a. 10 - 30 Gew.-% hydrophobierte Siliciumdioxidpartikel,
b. 50 - 80 Gew.-% Wasser,
c. 5 - 15 Gew.-%, wenigstens ein Alkoholalkoxylat der allgemeinen Formel

   R¹O((CH₂)ₘO)ₙH,

   wobei R¹ ein verzweigter oder unverzweigter Alkyl- oder Alkenylrest mit 10 - 25 C-Atomen, m = 2 oder 3 und n = 10 - 50 ist,
d. 0,5 - 5 Gew.-% wenigstens ein Amines und/oder Aminoalkohol mit einem Molekulargewicht von weniger als 500, bevorzugt weniger als 50 - 250,
e. 0 - 1 Gew.-% N-Methylpyrrolidon, bevorzugt kleiner 0,5 Gew.-%, besonders bevorzugt kleiner 0,1 Gew.-%, und die Dispersion weiterhin
f. 0,1 - 1 Gew.%, bezogen auf den Anteil an hydrophobierten Siliciumdioxidpartikeln, mindestens eines Copolymeren der allgemeinen Formel 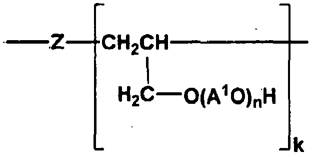 enthält, mit Z = 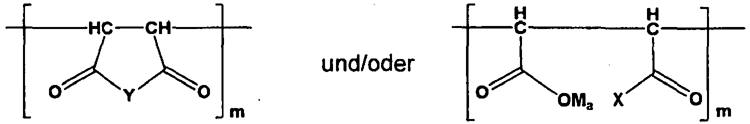 mit
   M Wasserstoff, ein- oder zweiwertiges Metallkation, Ammoniumion, organischer Aminrest,
   a1, oder für den Fall, dass M ein zweiwertiges Metallkation ist, a = 0,5
   X ebenfalls -OMₐ oder -O-(CₚH₂ₚO)_{q} - R⁴ mit
   R⁴ H, aliphatischer Kohlenwasserstoffrest mit 1 bis 20 C-Atomen, cycloaliphatischer Kohlenwasserstoffrest mit 5 bis 8 C-Atomen, gegebenenfalls substituierter Arylrest mit 6 bis 14 C-Atomen,
   p = 2 - 4, q = 0 -100, -NHR² und/oder -NR²₂ mit R² = R¹ oder -CO-NH₂
   Y O, NR²
   A¹ Ethylenrest, Propylenrest, iso-Propylenrest, Butylenrest,
   m 10 - 30, n 0 - 50, k 10 - 30, wobei die Summe m+k im Bereich von 20 - 60 liegt und wobei
g. die Dispersion 0,1 - 1,5 Gew.-% mindestens eines Polyethylenglycoles und/oder Polypropylenglycoles enthält,
wobei sich alle Angaben zu Gewichtsprozenten sich auf die Dispersion beziehen.

Die erfindungsgemäße Dispersion ist frei von Farbpigmenten und in der Lackindustrie eingesetzten Bindemitteln. In einer bevorzugten Ausführungsform beträgt der Anteil an hydrophobierten Siliciumdioxidpartikeln wenigstens 90 Gew.-%, besonders bevorzugt wenigstens 98 Gew.-%, am Feststoffanteil der Dispersion. Ganz besonders bevorzugt ist eine Ausführungsform, bei der die feste Phase der Dispersion vollständig aus hydrophobierten Siliciumdioxidpartikel besteht.

Unter hydrophobiert ist zu verstehen, dass Hydroxylgruppen an der Oberfläche von Siliciumdioxidpartikeln mit einem Mittel umgesetzt werden, welches den Partikeln hydrophobe Eigenschaften verleiht. Ein geeignetes Maß zum Grad der Hydrophobie liefert dabei die Methanolbenetzbarkeit.

Bei der Bestimmung der Methanolbenetzbarkeit werden in transparente Zentrifugenröhrchen jeweils 0,2 g (± 0,005 g) hydrophobe Siliciumdioxidpartikel eingewogen. Es werden zu jeder Einwaage 8,0 ml eines Methanol/Wasser Gemisches mit jeweils 10, 20, 30, 40, 50, 60, 70 und 80 Vol.-% Methanol zugegeben. Die verschlossenen Röhrchen werden 30 Sekunden geschüttelt und anschließend 5 Minuten bei 2500 min⁻¹ zentrifugiert. Die Sedimentvolumina werden abgelesen, in Prozent umgerechnet und graphisch gegen den Methanolgehalt (Vol.-%) aufgetragen. Der Wendepunkt der Kurve entspricht der Methanolbenetzbarkeit. Je höher die Methanolbenetzbarkeit desto größer ist die Hydrophobie der Siliciumdioxidpartikel. Als "hydrophobiert" gelten im Rahmen der Erfindung solche Partikel, deren Methanolbenetzbarkeit mindestens 20 Vol.-% beträgt.

Es wurde gefunden, dass besonders gute Lackeigenschaften dann erzielt werden, wenn die Methanolbenetzbarkeit 20 bis 80 Vol.-% beträgt. Ganz besonders bevorzugt können Partikel mit einer Methanolbenetzbarkeit von 30 bis 60 Vol.-% sein.

Geeignete kommerzielle erhältliche hydrophobierte Siliciumdioxidpartikel, die diese Bedingung erfüllen sind beispielsweise AEROSIL^{®}R972, AEROSIL^{®} R974, AEROSIL^{®}R104, AEROSIL^{®} R106, AEROSIL^{®} R805, AEROSIL^{®} R812, AEROSIL^{®} R812 S, AEROSIL^{®} R202, AEROSIL^{®} R8200und AEROSIL^{®} R9200, alle Evonik Degussa (Tabelle 1).

Bevorzugterweise können die hydrophobierten Siliciumdioxidpartikel durch Hydrophobierung pyrogen hergestellter Siliciumdioxidpartikel erhalten werden. Unter pyrogen sind durch Flammhydrolyse oder Flammoxidation hergestellte Partikel zu verstehen. Pyrogene Siliciumdioxidpartikel sind beispielsweise in Ullmann's Encyclopedia of Industrial Chemistry, Vol. A23, Seite 635, 5. Auflage beschrieben. Diese Partikel liegen in der Regel in Form aggregierter Primärpartikel auf und weisen auf ihrer Oberfläche reaktive Zentren auf, die mit einem Hydrophobierungsmittel reagieren können. Die für die erfindungsgemäße Dispersion eingesetzten hydrophobierten Siliciumdioxidpartikel weisen bevorzugt eine BET-Oberfläche von 50 - 300 m²/g, besonders bevorzugt eine von 70 - 200 m²/g und ganz besonders bevorzugt eine von 90 - -150 m²/g auf.

Als hydropobierte Siliciumdioxidpartikel eignen sich besonders solche, die durch Umsetzung mit einem Organosilan, einem Silazan oder einem cyclischen Polysiloxan erhalten werden. Bei dieser Umsetzung werden silanisierte Siliciumdioxidpartikel erhalten, bei denen eine chemische Bindung der Art O-Si an der Oberfläche vorliegt.

Als Mittel zur Hydrophobierung eignen sich insbesondere Organosilane (RO)₃Si(CₙH₂ₙ₊₁) und (RO)₃Si(CₙH₂ₙ₋₁), mit R = Alkyl, wie Methyl, Ethyl, n-Propyl, i-Propyl, Butyl und n = 1 - 20.

Organosilane R'ₓ(RO)_{y}Si(CₙH₂ₙ₊₁) und R'ₓ(RO)_{y}Si(CₙH₂ₙ₋₁), mit R und/oder R' = alkyl, such as methyl, ethyl, n-propyl, isopropyl, butyl; n = 1 - 20; x + y = 3, x = 1 oder 2; y = 1 oder 2.

Halogenorganosilane X₃Si(CₙH₂ₙ₊₁) und X₃Si(CₕH₂₋₁), mit X = Cl, Br; n = 1 - 20.

Halogenorganosilane X₂(R')Si(CₙH₂ₙ₊₁) und X₂(R')Si(CₙH₂ₙ₋₁), mit X = Cl, Br, R' = Alkyl, wie Methyl, Ethyl, n-Propyl, i-Propyl, Butyl-; R' = Cycloalkyl; n = 1-20 Halogenorganosilane X(R')₂Si(CₙH₂ₙ₊₁) und X(R')₂Si(CₙH₂ₙ₋₁), mit X = Cl, Br; R' = Alkyl, wie Methyl-, Ethyl-, n-Propyl-, i-Propyl-, Butyl-; R '= Cycloalkyl; n = 1-20
Organosilane (RO)₃Si(CH₂)ₘ-R', mit R=Alkyl, wie Methyl-, Ethyl-, Propyl-; m = 0,1 - 20; R'= Methyl;
Organosilane (R")ₓ(RO)_{y}Si(CH₂)ₘ-R', mit R" = Alkyl, x + y = 3; Cycloalkyl, x = 1 oder 2; y = 1 oder 2; m = 0,1 - 20; R' = Methyl.

Halogenorganosilane X₃Si(CH₂)ₘ-R' mit X = Cl, Br; m = 0,1 - 20; R' = Methyl.

Halogenorganosilane RX₂Si(CH₂)ₘR' mit X=Cl, Br; m = 0,1 - 20; R' = Methyl.

Halogenorganosilane R₂XSi(CH₂)ₘR' mit X = Cl, Br; m = 0,1 - 20; R' = Methyl.

Silazane R'R₂SiNHSiR₂R' mit R,R'= Alkyl, Vinyl, Aryl.

Cyclische Polysiloxane D3, D4, D5 und ihre Homologen, wobei unter D3, D4 und D5 cyclische Polysiloxane mit 3, 4 oder 5 Einheiten des Typs -O-Si(CH₃)₂ verstanden wird, z.B. Octamethylcyclotetrasiloxan = D4.

Polysiloxane bzw. Silikonöle des Typs

Y-O-[(R¹R²SiO)ₘ-(R³R⁴SiO)ₙ]ᵤ-Y

, mit
R¹, R², R³, R⁴ = unabhängig voneinander Alkyl, wie CₙH₂ₙ₊₁,
n = 1-20; Aryl, wie Phenylradikale und substitutierte Phenylradikale, (CH₂)ₙ-NH₂, H
Y = CH₃, H, CₙH₂ₙ₊₁, n=2-20; Si(CH₃)₃, Si(CH₃)₂H, Si(CH₃)₂OH, Si(CH₃)₂(OCH₃), Si(CH₃)₂(CₙH₂ₙ₊₁), n = 2-20
m = 0,1,2,3,..., 100000,
n = 0,1,2,3,..., 100000,
u = 0,1,2,3,....,100000.

Kommerziell erhältliche Produkte sind beispielsweise RHODORSIL® OILS 47 V 50, 47 V 100, 47 V 300, 47 V 350, 47 V 500, 47 V 1000, Wacker Silicon Fluids AK 0,65, AK 10, AK 20, AK 35, AK 50, AK 100, AK 150, AK 200, AK 350, AK 500, AK 1000, AK 2000, AK 5000, AK 10000, AK 12500, AK 20000, AK 30000, AK 60000, AK 100000, AK 300000, AK 500000, AK 1000000 oder Dow Corning® 200 fluid.

Bevorzugt können als Oberflächenmodifizierungsmittel folgende Stoffe eingesetzt werden: Octyltrimethoxysilan, Octyltriethoxysilan, Dimethyldichlorsilan, Hexamethyldisilazan, 3-Methacryloxypropyltriethoxysilan, Hexadecyltrimethoxysilan, Hexadecyltriethoxysilan und Dimethylpolysiloxan. Besonders bevorzugt kann Dimethyldichlorsilan eingesetzt werden. Ein für die erfindungsgemäße Dispersion besonders geeignetes kommerziell erhältliches Pulver von hydrophobierten Siliciumdioxidpartikeln ist beispielsweise AEROSIL^{®}R972, Evonik Degussa.

Weiterhin hat es sich als vorteilhaft erwiesen, wenn die hydrophobierten Siliciumdioxidpartikel in der erfindungsgemäßen Dispersion eine mittlere Partikelgröße d₅₀ von höchstens 300 nm aufweisen. Besonders bevorzugt ist ein Bereich von 100 - 250 nm.

Die flüssige Phase der Dispersion besteht aus einer einzigen Phase. Die flüssige Phase Dispersion umfasst Wasser, wenigstens ein Alkoholalkoxylat, wenigstens ein Amin und/oder Aminoalkohol, Polyethylenglycol, Polypropylenglycol und ein von der Maleinsäure abgeleitetes Copolymeres, gegebenenfalls jeweils ein organisches Lösungsmittel und N-Methylpyrrolidon.

Mit 50 - 80 Gew.-% stellt Wasser den Hauptbestandteil der erfindungsgemäßen Dispersion dar. Bevorzugt können Dispersionen sein, deren Wassergehalt 60 - 75 Gew.-% beträgt.

In einer besonderen Ausführungsform der Erfindung beträgt der Anteil des Alkoholalkoxylates der allgemeinen Formel R¹O((CH₂)ₘO)ₙH 5 - 20 Gew.-%, bevorzugt 8 - 15 Gew.-%, jeweils bezogen auf den Anteil an hydrophobierten Siliciumdioxidpartikeln.

Die besten lacktechnischen Ergebnisse werden für eine oder mehrere Verbindungen der allgemeinen Formel R¹O((CH₂)ₘO)ₙH mit R¹ = CH₃(CH₂)ₓCH₂O mit x = 8 - 18, m = 1 - 4 und n = 15 - 25 erhalten.

### Explizit seien

CH₃(CH₂)₁₀CH₂O[(CH₂)₂O]₁₈H, CH₃(CH₂)₁₂CH₂O[(CH₂)₂O]₁₈H, CH₃(CH₂)₁₄CH₂O[(CH₂)₂O]₁₈H, CH₃(CH₂)₁₆CH₂O[(CH₂)₂O]₁₈H, CH₃(CH₂)₁₀CH₂O[(CH₂)₂O]₂₀H; CH₃(CH₂)₁₂CH₂O[(CH₂)₂O]₂₀H, CH₃(CH₂)₁₄CH₂O[(CH₂)₂O]₂₀H, CH₃(CH₂)₁₆CH₂O[(CH₂)₂O]₂₀H, CH₃(CH₂)₁₀CH₂O[(CH₂)₂O]₂₃H, CH₃(CH₂)₁₂CH₂O[(CH₂)₂O]₂₃H, CH₃(CH₂)₁₄CH₂O[(CH₂)₂O]₂₃H und CH₃(CH₂)₁₆CH₂O[(CH₂)₂O]₂₃H genannt.

Die flüssige Phase der erfindungsgemäßen Dispersion enthält weiterhin Amine und/oder Aminoalkohole. Ihr Anteil beträgt bevorzugt 3 -20 Gew.-%, bevorzugt 5 - 15 Gew.-%, jeweils bezogen auf den Anteil an hydrophobierten Siliciumdioxidpartikeln.

Bevorzugt kann die Dispersion Aminoalkohole enthalten. Mit dem Ausdruck Aminoalkohol ist eine Verbindung gemeint, welche wenigstens eine Aminogruppe und wenigstens eine Hydroxylgruppe enthält. Das Molekulargewicht des Aminoalkohols zur Verwendung in der vorliegenden Erfindung beträgt bevorzugt 50 - 500, besonders bevorzugt 100 - 250. Geeignete Aminoalkohole sind 2-Aminoethanol, 1-Aminoethanol, 3-Amino-1-propanol, 2-Amino-1-propanol, 1-Amino-2-propanol, 2-Amino-2-methyl-1-propanol, 2-Amino-2-methyl-1,3-propandiol, 2-Amino-2-hydroxymethyl-1,3-propandiol, 2-(2-Amino-ethoxy)ethanol, 2-Amino-1-butanol, 4-Amino-1-butanol, 1-Amino-2-butanol, 1-Amino-3-butanol, 3-Amino-1-butanol, 2-Amino-1-cyclohexanol, 3-Amino-1-cyclohexanol, 4-Amino-1-cyclohexanol, 2-Amino-1-(hydroxymethyl)cyclopentan, 2-Amino-1-hexanol, 6-Amino-1-hexanol, 2-Amino-3-methyl-1-butanol, 1-(Aminomethyl)-cyclohexanol, 6-Amino-2-methyl-2-heptanol, 2-Amino-3-methyl-1-pentanol, 2-Amino-4-methyl-1-pentanol, 2-Amino-1-pentanol, 5-Amino-1-pentanol, 1-Amino-2,3-propandiol, 2-Amino-1,3-propandiol, 2-((3-Aminopropyl)-methyl-amino)-ethanol oder deren Gemische.

Weiterhin können Aminoalkohole des Types (CH₃)₂NCHR₁CHR₂-O-[CHR₃-CHR₄-O]ₙH, in denen R₁, R₂, R₃ und R₄ jeweils für H, CH₃ oder C₂H₅ und n für 1 - 5 stehen kann, wobei R₁, R₂, R₃ und R₄ jeweils gleich oder verschieden sein können, eingesetzt werden. Beispielhaft seien 1-(2-dimethylaminoethoxy)2-propanol,
1-(1-dimethylamino-2-propoxy)-2-propanol,
2-(1-dimethylamino-2-propoxy)ethanol, 2-(2-dimethylaminoethoxy)ethanol und 2-[2-(2-dimethylaminoethoxy)ethoxy]ethanol
Bestandteil der erfindungsgemäßen Dispersion sein.

Die besten lacktechnischen Ergebnisse werden mit N,N-Dialkylalkanolaminen wie N,N-Dimethylethanolamin und N,N-Dimethylisopropanolamin erhalten.

Die erfindungsgemäße Dispersion enthält weiterhin 0,1 - 1,5 Gew.-% mindestens eines Polyethylenglycoles und/oder Polypropylenglycoles. Bevorzugt sind Polypropylenglycole mit einem mittleren Molekulargewicht (Massenmittel) von 100 oder mehr, besonders bevorzugt 150 - 6000.

Die erfindungsgemäße Dispersion enthält weiterhin 0,1 -1 Gew.-%, bezogen auf den Anteil an hydrophobierten Siliciumdioxidpartikeln, mindestens eines Copolymeren der allgemeinen Formel I. -(A¹O)ₙ- kann sowohl ein Homopolymerisat aus einer der genannten Alkylenoxide als auch ein Block-Copolymerisat oder Co-Polymerisat mit statistischer Verteilung von zwei oder mehreren der Monomeren im Polymermolekül sein. Die Einheiten [ ]ₘ und [ ]ₖ können ebenfalls als Block-Copolymerisate oder Co-Polymerisate mit statistischer Verteilung von zwei oder mehreren der Monomeren im Polymermolekül vorliegen.

Als ein- oder zweiwertiges Metallkation M finden vorzugsweise Natrium-, Kalium-, Calcium-, Magnesiumionen Verwendung. Als organische Aminreste werden vorzugsweise substituierte Ammoniumgruppen eingesetzt, die sich ableiten von primären, sekundären oder tertiären C₁- bis C₂₀-Alkylaminen, C₁- bis C₂₀-Alkanolaminen, C₅- bis C₈-Cycloalkylaminen und C₆- bis C₁₄-Arylaminen. Beispiele für entsprechende Amine sind Methlylamin, Dimethylamin, Trimethylamin, Ethanolamin, Diethanolamin, Triethanolamin, Cyclohexylamin, Dicyclohexylamin, Phenylamin, Diphenylamin in der protonierten (Ammonium)-Form.

X kann bedeuten -OMₐ oder -O-(CₚH2ₚO)_{q}-R¹ mit R¹ = H, ein aliphatischer Kohlenwasserstoffrest mit 1 bis 20 C-Atomen, ein cycloaliphatischer Kohlenwasserstoffrest mit 5 bis 8 C-Atomen, ein Arylrest mit 6 bis 14 C-Atomen, der gegebenenfalls noch substituiert sein kann. p kann sein von 2 bis 4, q = 0 bis 100, wobei in einer bevorzugten Ausführungsform p = 2 oder 3 ist, und sich dadurch von Polyethylenoxid oder Polypropylenoxid ableitet. Alternativ kann X noch -NHR² und/oder -NR²₂ mit R² = R¹ oder -CO-NH₂ bedeuten, was den mono- oder disubstituierten Monoamiden der entsprechenden ungesättigten Carbonsäure entspricht.

Y kann O (Säureanhydrid) oder NR² (Säureimid) bedeuten.

Bevorzugt kann ein Copolymeres der allgemeinen Formel la oder Ib eingesetzt werden, wobei A¹ ein Ethylenrest ist, m 10 bis 30, n 5 bis 20, k 10 bis 30 und wobei die Summe m + k im Bereich von 20 bis 40 liegt.

Bevorzugt können auch Verbindungen mit der allgemeinen Formel Ia oder Ib eingesetzt werden, bei denen R ein gegebenenfalls verzweigter, gegebenenfalls Mehrfachbindungen, gegebenenfalls Hydroxylgruppen enthaltender Akylrest mit 8 bis 18 C-Atomen, A ein Ethylenrest, M = H oder ein Alkalimetall, a 1 bis 30, b 1 oder 2, bedeuten.

Weiterhin kann die erfindungsgemäße Dispersion bis zu 10 Gew.-% wenigstens eines organischen Lösungsmittels, ausgenommen N-Methylpyrrolidon, enthalten. Das Lösungsmittel wird bevorzugt aus der Gruppe bestehend aus aliphatischen, cycloaliphatischen und aromatischen Kohlenwasserstoffen, Alkoholen, Glycolen, Glycolethern, Ketonen, Estern und Ethern ausgewählt. Explizit seien n-Hexan, n-Heptan, Cyclohexan, Toluol, Xylol, Ethylbenzol, Cumol, Styrol, Dichlormethan, 1,2-Dichlorethan, Methanol, Ethanol, 1-Propanol, 2-Propanol, 1-Butanol, Isobutanol, 2-Ethylhexanol, Cyclohexanol, Diacetonalkohol, Aceton, Methylethylketon, Methylisobutylketon, Diisobutylketon, Cyclohexanon, Mesityloxid, Isophoron, Methylacetat, Ethylacetat, Butylacetat, Butylether, Isobutylacetat, Methylglycolacetat, Butylglycolacetat, Ethyldiglycolacetat, Butyldiglycolacetat, Methoxypropylacetat, Ethoxypropylacetat, Ethylencarbonat, Propylencarbonat, Diethylether, Methyl-tert-butylether, Tetrahydrofuran, Dioxan, 1-Methoxy-2-propanol, 1-Ethoxy-2-propanol, 1-Isopropoxy-2-propanol, 1-Isobutoxy-2-propanol, Ethylglycol, Propylglycol, Butylglycol, Ethyldiglycol, Butyldiglycol, Methyldipropylenglycol, Ethylenglycol, 1,2-Propylenlycol, 1,3-Butylenglycol, 2,4-Pentandiol, 2-Methyl-2,4-Pentandiol, 2,5-Hexandiol, 2,4-Heptandiol, 2-Ethyl-1,3-Hexandiol, Diethylenglycol, Dipropylenglycol, Tripropylenglycol, Hexandiol, Octandiol und Triethylenglycol genannt. Besonders bevorzugt kann Diethylenglycol, Dipropylenglycol und Tripropylenglycol sein.

Schließlich können der erfindungsgemäßen Dispersion noch Entschäumungsmittel und Konservierungsmittel zugesetzt sein. Ihr Anteil an der Dispersion liegt in der Regel bei unter 1 Gew.-%.

Als Dispergiervorrichtung zur Herstellung der erfindungsgemäßen Dispersion eignet sich jede Vorrichtung, die in der Lage ist, eine intensive Benetzung des hydrophoben Pulvers mit der wässerigen Phase zu ermöglichen. In der Lackindustrie werden hierzu gerne Dissolver verwendet, deren relativ einfacher Aufbau eine wartungsarme und leicht zu reinigende Produktionsweise ermöglicht. Je nach geforderter Viskosität oder auch Füllgrad der zu erzeugenden wässrigen Dispersion ist jedoch noch ein intensives Dispergieren oder Nachvermahlen notwendig. Das Nachvermahlen kann beispielsweise in Rührwerkskugelmühlen erfolgen. Vielfach reicht jedoch eine intensive Scherung mit Hilfe von Rotor/Stator-Maschinen aus. Eine zweckdienliche Kombination aus Benetzung- und Dispergiermöglichkeit stellen die Rotor/Stator-Maschinen der Firma Ystral dar, die es ermöglichen, das Pulver einzusaugen und nach dem Schließen der Pulver-Einsaugöffnung intensiv scherend zu dispergieren.

Insbesondere beim Einsatz von Rotor/Stator-Maschinen, bei denen es zum Einsaugen von Luft und daher zu Schaumbildung kommen kann, hat es sich als vorteilhaft erwiesen, nur einen Teil des benötigten Wassers und die Additive vorzulegen und einen Teil des hydrophoben Siliciumdioxides einzuarbeiten. Ab einer bestimmten Menge hydrophoben Siliciumdioxides, ca. 25 - 30 Gew.-%, bezogen auf das insgesamt einzuarbeitende hydrophobe Siliciumdioxid, ist dessen entschäumende Wirkung festzustellen. Erst nach Zugabe der gesamten Pulvermenge werden anschließend die noch fehlenden Anteile Wasser hinzugegeben. Es wird dadurch ein ausreichendes Volumen für die anfängliche Schaumbildung beim Beginn der Pulverzugabe im Ansatzbehälter vorgehalten.

Ein weiterer Gegenstand der Erfindung ist eine Lackzubereitung, welche die Dispersion enthält.

Geeignete Bindemittel hierbei können, die in der Lack- und Beschichtungstechnologie üblichen Harze, wie sie zum Beispiel in "Lackharze, Chemie, Eigenschaften und Anwendungen, Hrsg. D. Stoye, W. Freitag, Hanser Verlag, München, Wien 1996", beschrieben sind, sein.

Beispielhaft zu nennen sind u. a. die Polymerisate und Copolymerisate der (Meth)acrylsäure und deren gegebenenfalls weitere funktionelle Gruppen tragenden Ester mit weiteren olefinisch ungesättigten Verbindungen, wie zum Beispiel Styrol, Polyetherpolyole, Polyesterpolyole, Polycarbonatpolyole, Polyurethanpolyole und Epoxidharze sowie auch beliebige Mischungen dieser Polymeren, sowie durch Polykondensation hergestellte fettsäuremodifizierte Alkydharze beschrieben werden.

Weiterhin können als Polymerkomponenten organische, Hydroxylgruppen tragende Verbindungen eingesetzt werden, zum Beispiel Polyacrylat-, Polyester-, Polycaprolacton-, Polyether-, Polycarbonat-, Polyurethanpolyole und hydroxyfunktionelle Epoxidharze sowie beliebige Mischungen dieser Polymeren eingesetzt werden. Insbesondere wässrige oder lösemittelhaltige bzw. lösemittelfreie Polyacrylat- und Polyesterpolyole sowie deren beliebige Mischungen eingesetzt.

Polyacrylatpolyole sind Copolymerisate von u. a. Hydroxylgruppen aufweisenden Monomeren mit anderen olefinisch ungesättigten Monomeren, wie zum Beispiel Ester der (Meth)acrylsäure, Styrol-, alpha-Methylstyrol, Vinyltoluol, Vinylester, Malein- und Fumarsäuremono- und -dialkylester, alpha-Olefine und weiteren ungesättigten Oligomeren und Polymeren.

Die erfindungsgemäße Zubereitung kann weiterhin Farbpigmente und/oder inaktive Füllstoffe enthalten.

Die Farbpigmente können organischer oder anorganischer Natur sein. Beispielhaft seien Bariumsulfat, Bleioxide, Bleisilikate, Eisenoxide, Phthalocyaninkomplexe, Titandioxide, Zinkoxide und Zinksulfid genannt.

Die erfindungsgemäße Zubereitung kann weiterhin inaktive Füllstoffe enthalten. Unter inaktiven Füllstoffen sind dem Fachmann bekannte Füllstoffe zu verstehen, die die rheologischen Eigenschaften der Zubereitung nicht oder nur unwesentlich beeinflussen. Beispielhaft seien Calciumcarbonat, Diatomeenerde, Glimmer, Kaolin, Kreide, Quarz und Talkum genannt.

Farbpigmente und/oder inaktive Füllstoffe liegen üblicherweise in Anteilen von in Summe 10 bis 70 Gew.-%, bevorzugt 30 bis 50 Gew.-%, bezogen auf den Gesamtfestkörperanteil der Zubereitung, vor.

Der Gesamtfestkörperanteil der Zubereitung, der sich aus hydrophobiertem Siliciumdioxidpartikeln, Bindemittel und gegebenenfalls Farbpigmenten und inaktiven Füllstoffen zusammensetzt, beträgt vorzugsweise 40 bis 60 Gew.-%, bezogen auf die Zubereitung.

Ein weiterer Gegenstand der Erfindung ist die Verwendung der Dispersion als Zusatz zu Hydrofüllern in der Automobilindustrie, als Beschichtungsbestandteil in Can- und Coil-coating-Verfahren und als Additiv in wasserbasierenden UVhärtbaren Formulierungen.

### Beispiele

Die Herstellung der Dispersionen 1-4 erfolgt, indem zunächst die-flüssigen Komponenten der Dispersion mittels eines Dissolvers gemischt werden. Anschließend wird AEROSIL^{®} 972, Evonik Degussa unter Rühren zugegeben, zunächst mittels eines Dissolvers bei 4000 UpM über einen Zeitraum von 5 Minuten vordispergiert und dann mittels eines Ultra-Turrax bei 7000 UpM über einen Zeitraum von 30 Minuten dispergiert. Nachfolgend wird mit zusätzlichem Wasser ein Gehalt an AEROSIL^{®} 972 von 20 Gew.-% eingestellt.

Die Zusammensetzung der Dispersionen und ihre physikalisch-chemischen Eigenschaften sind in Tabelle 2 wiedergegeben. Die Dispersion 1 stellt eine erfindungsgemäße Dispersion dar.

Die erfindungsgemäße Dispersion 1 weist trotz des hohen Feststoffgehaltes, 24 Stunden nach ihrer Herstellung und bei Raumtemperatur eine niedrige Viskosität auf. Auch bei einer Lagerung über 4 Wochen bei 40°C nimmt die Viskosität nur unmerklich zu. Bei den Dispersionen 2 und 3 scheitert die Herstellung einer hochgefüllten Dispersion, da die Zubereitung pastös wird. Auch die Dispersion 4 ist für eine Lackzubereitung ungeeignet, da sie beim Lagertest bei 40°C bereits nach vier Wochen einen starken Viskositätsanstieg zweigt. Unter diesen Bedingungen zeigt die erfindungsgemäße Dispersion 1 einen vernachlässigbaren Viskositätsanstieg.

### Prüfung von Dispersionen in einem Füller

Das Reibgut (Tabelle 3) wird vorgemischt und mittels Perlmühle SL 5 für 20 Minuten dispergiert (1 mm Glasperlen, 3000 UpM, bis Grindometerwert <10 µm). Die Harzmischung (Tabelle 4) wird mittels Flügelrührer vorgemischt. Die Harzmischung und die Anreibung werden mittels Dissolver vorgemischt. Die Dispersion und das restliche Wasser werden unter Rühren zugegeben (Tabelle 5). Anschließend wird der pH-Wert auf ca. 8,6 mit DMEA (10% in Wasser) eingestellt.

Die Viskositätsmessung des Füllers erfolgt nach 4 Wochen Lagerung bei 23°C. Die Sprungversuche erfolgten bei 120 s, Scherrate 500 s⁻¹ und 300 s, Scherrate 0,5 s⁻¹. Eine Sprungkurve soll zeigen, wie schnell sich die mit den Fließkurven ermittelte Viskosität bei schneller Veränderung der Scherrate wieder einstellt. Bei idealer Strukturviskosität sollte die Viskosität sobald die Scherrate sinkt sofort ansteigen und einen konstanten Wert aufweisen. Ein etwas verzögerter Aufbau der Viskosität ist gewünscht, da er hilft einen besseren Verlauf des Lackes/Farbe zu erzielen.

Die Bestimmung des Absetzverhaltens des Füllers 4 Wochen nach Lagerung bei 23°C. Die Sedimenthöhe wird ausgemessen und das prozentuale Verhältnis zwischen Sediment und überstehender Phase berechnet.

Aus den Sprungkurven kann entnommen werden, dass es bei der Zubereitung auf Basis einer Dispersion mit 1 Gew.-% AEROSIL^{®} R 972 es schnell wieder zu einer Viskositätserhöhung kommt.

**Tabelle 1: Siliciumdioxidpulver, geeignet zur Herstellung der erfindungsgemäßen Dispersion**

| AEROSIL^{®} | Hydrophobierungsmittel | BET-Oberfläche* | Methanol-benetzbarkeit |
|---|---|---|---|
| R104 | Octamethylcyclotetrasiloxan | 150 | 40 |
| R106 | Octamethylcyclotetrasiloxan | 250 | 45 |
| R202 | Polydimethylsiloxan | 100 | 75 |
| R805 | Octylsilan | 150 | 45 |
| R812 | Hexamethyldisilazan | 260 | 50 |
| R812S | Hexamethyldisilazan | 220 | 60 |
| R972 | Dimethyldichlorsilan | 110 | 45 |
| R974 | Dimethyldichlorsilan | 170 | 45 |
| R8200 | Hexamethyldisilazan | 160 | 65 |
| R9200 | Dimethyldichlorsilan | 170 | 30 |

| | | | |
|---|---|---|---|
| * in m²/g; ca-Werte | | | |

**Tabelle 2: Zusammensetzung der Dispersionen und ihre physikalischchemischen Eigenschaften**

| Dispersion | | 1 | 2⁵⁾ | 3⁶⁾ | 4 |
|---|---|---|---|---|---|
| Wasser | g | 500,0 | 550,7 | 509,8 | 509,8 |
| Gemisch 1¹⁾ | g | 78,0 | - | - | - |
| Tego^{®} Dispers 740 W²⁾ | g | - | 27,3 | - | - |
| Tego^{®} Dispers 745 W³⁾ | g | - | - | 68,2 | - |
| Tego^{®} Dispers 750 W⁴⁾ | g | - | - | - | 68,2 |
| DMEA | g | 18,0 | 18,0 | 18,0 | 18,0 |
| Tripropylenglycol | g | 9,0 | 9,0 | 9,0 | 9,0 |
| Byk 011 | g | 2,7 | 2,7 | 2,7 | 2,7 |
| Surfynol^{®} 104 E | g | 2,7 | 2,7 | 2,7 | 2,7 |
| AEROSIL^{®} R 972 | g | 183,9 | 183,9 | 183,9 | 183,9 |
| Summe | g | 794,3 | 794,3 | 794,3 | 794,3 |
| zusätzliches Wasser | g | 105,7 | 105,7 | 105,7 | 105,7 |
| Summe | g | 900,0 | 900,0 | 900,0 | 900,0 |
| pH-Wert | | 10,5 | - | - | 10,3 |
| η⁷⁾ 24 h, 20°C | | | - | - | |
| 1s⁻¹ | mPas | 82 | | | 55 |
| 10 s⁻¹ | | 70 | | | 41 |
| 100 s⁻¹ | | 61 | | | 28 |
| η⁷⁾ 4 Wochen, 40°C | | | - | - | |
| 1s⁻¹ | mPas | 100 | | | 2000 |
| 10 s⁻¹ | | 80 | | | 1000 |
| 100 s⁻¹ | | 55 | | | 500 |
| d₅₀⁸⁾ | µm | 0,125 | - | - | 0,127 |
| d₉₀⁸⁾ | µm | 0,221 | - | - | 0,234 |

| | | | | | |
|---|---|---|---|---|---|
| 1) 65 Gew.-% Wasser, 23 Gew.-%, in Summe, CH₃(CH₂)₁₆CH₂O[(CH₂)₂O]ₓ₁₈H mit x = 18, 20, 23; 8 Gew.-% Polypropylenglycol und 4 Gew.-% Verbindung der Formel Ib, MW 15000; 2) Fettsäurealkoxylat; Evonik Tego Chemie; 3) modifiziertes Acrylat; Evonik Tego Chemie; 4) Styrol-Maleinsäureanhydrid-Copolymer; Evonik Tego Chemie; 5), 6) Versuch abgebrochen, AEROSIL^{®} konnte nicht vollständig zugegeben werden da zu hochviskos; 7) Viskosität bestimmt bei 23°C mit MCR 300 von Fa. Paar Physica, Scherraten 1s⁻¹, 10 s⁻¹, 100 s⁻¹; 8) bestimmt mit Coulter LS; | | | | | |

**Tabelle 3: Zusammensetzung Reibgut**

| | | |
|---|---|---|
| Bayhydrol^{®} D270¹⁾ | g | 3,76 |
| Demineralisiertes Wasser | g | 7 |
| DMEA²⁾ | g | 0,53 |
| Surfynol^{®} 104 E³⁾ | g | 0,48 |
| BYK-011 | g | 0,89 |
| Tronox^{®} RF-D-1 | g | 9,64 |
| Bayferrox^{®} 308T¹⁾ | g | 0,11 |
| Blanc fix Micro | g | 9,7 |
| Talkum IT extra | g | 2,37 |

| | | |
|---|---|---|
| 1) Fa. Bayer; 2) N,N-Dimethylethanolamin; 10 Gew.-% in Wasser; 3) Air Products; | | |

**Tabelle 4: Zusammensetzung Harzmischung**

| | | |
|---|---|---|
| Bayhydrol^{®} D270¹⁾ | g | 4,01 |
| Bayhytherm^{®} 3146¹⁾ | g | 19,29 |
| Bayhytherm^{®} VP LS 2153¹⁾ | g | 22,17 |
| Cymel 327²⁾ | g | 4,54 |
| BYK 346 | g | 0,52 |
| DMEA³⁾ | g | 1,00 |
| Demineralisiertes Wasser | g | 4,00 |

| | | |
|---|---|---|
| 1) Fa. Bayer; 2) Fa. Cytec; 3) N,N-Dimethylethanolamin; 10 Gew.-% in Wasser | | |

**Tabelle 5: Füller**

| | | gemäß Erfindung | Vergleich |
|---|---|---|---|
| Dispersion 1 | g | 5,00 | 0 |
| Wasser | g | 4,09 | 8,09 |
| Summe Füller | g | 99,1 | 98,1 |
| Konz Kieselsäure | Gew.-% | 1 | 0 |
| pH-Wert* | | 8,4 | 8,0 |
| Grindometerwert | µm | 12 | 12 |
| Absetzverhalten der Füller** | % | 14 | 56 |
| Viskositätserhöhung beim Sprungversuch (0,5 s⁻¹) | mPas | 950 | 200 |

| | | | |
|---|---|---|---|
| * mit DMEA (10% in Wasser) auf pH-Wert ca. 8,6 einstellen; **nach Lagerung 4 Wochen bei RT (Überstand in %) | | | |

## Patentansprüche

1. Wässerige, hydrophobierte Siliciumdioxidpartikel enthaltende Dispersion, **dadurch gekennzeichnet, dass** sie
a. 50 - 80 Gew.-% Wasser,
b. 10 - 30 Gew.-% hydrophobierte Siliciumdioxidpartikel,
c. 5 - 15 Gew.-%, wenigstens ein Alkoholalkoxylat der allgemeinen Formel R¹O((CH₂)ₘO)ₙH, wobei
R¹ ein verzweigter oder unverzweigter Alkyl- oder Alkenylrest mit 10 - 25 C-Atomen, m = 2 oder 3 und n = 10 - 50 ist,
d. 0,5 - 5 Gew.-% wenigstens ein Amin und/oder einen Aminoalkohol mit einem Molekulargewicht von weniger als 500 und
e. 0 - 1 Gew.-% N-Methylpyrrolidon,
enthält, und die Dispersion weiterhin
f. 0,1 - 1 Gew.-%, bezogen auf den Anteil an hydrophobierten Siliciumdioxidpartikeln, mindestens eines Copolymeren der allgemeinen Formel 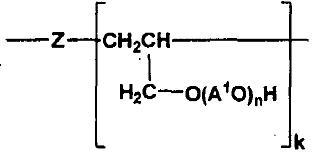 enthält, mit Z = 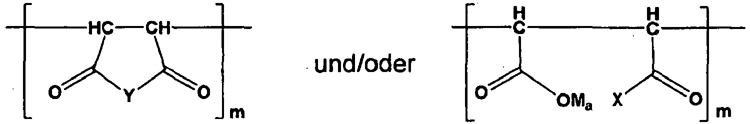 mit
M Wasserstoff, ein- oder zweiwertiges Metallkation, Ammoniumion, organischer Aminrest,
a 1, oder für den Fall, dass M ein zweiwertiges Metallkation ist, a = 0,5
X ebenfalls -OMₐ oder -O-(CₚH₂ₚO)_{q} - R⁴ mit
R⁴ H, aliphatischer Kohlenwasserstoffrest mit 1 bis 20 C-Atomen, cycloaliphatischer Kohlenwasserstoffrest mit 5 bis 8 C-Atomen, gegebenenfalls substituierter Arylrest mit 6 bis 14 C-Atomen,
p = 2 -4, q = 0 - 100, -NHR² und/oder-NR²₂ mit R²= R¹ oder -CO-NH₂
Y O, NR²
A¹ Ethylenrest, Propylenrest, iso-Propylenrest, Butylenrest,
m 10 - 30, n 0 - 50, k 10 - 30, wobei die Summe m+k im Bereich von 20 - 60 liegt und wobei
g. die Dispersion 0,1 - 1,5 Gew.-% mindestens eines Polyethylenglycoles und/oder Polypropylenglycoles enthält.
wobei sich alle Angaben zu Gewichtsprozenten sich auf die Dispersion beziehen.

2. Dispersion nach Anspruch 1, **dadurch gekennzeichnet, dass** die hydrophobierten Siliciumdioxidpartikel eine Methanolbenetzbarkeit von 30 - 60 Vol.-% aufweisen.

3. Dispersion nach den Ansprüchen 1 oder 2, **dadurch gekennzeichnet, dass** die hydrophobierten Siliciumdioxidpartikel silanisierte Siliciumdioxidpartikel sind.

4. Dispersion nach den Ansprüchen 1 bis 3, **dadurch gekennzeichnet, dass** die hydrophobierten Siliciumdioxidpartikel pyrogener Herkunft sind.

5. Dispersion nach den Ansprüchen 1 bis 4, **dadurch gekennzeichnet, dass** die hydrophobierten Siliciumdioxidpartikel einer mittlere Partikelgröße d₅₀ in der Dispersion von höchstens 300 nm, bevorzugt 100 - 250 nm, aufweisen.

6. Dispersion nach den Ansprüchen 1 bis 5, **dadurch gekennzeichnet, dass** der Anteil des Alkoholalkoxylates der allgemeinen Formel R¹O((CH₂)ₘO)ₙH 5 - 20 Gew.-%, bevorzugt 8 - 15 Gew.%, jeweils bezogen auf den Anteil an hydrophobierten Siliciumdioxidpartikeln, beträgt.

7. Dispersion nach den Ansprüchen 1 bis 6, **dadurch gekennzeichnet, dass** in der allgemeinen Formel des Alkoholalkoxylates R¹O((CH₂)ₘO)ₙH R¹ = CH₃(CH₂)ₓCH₂O mit x = 8 - 18, m = 1 - 4 und n = 15 - 25 bedeutet.

8. Dispersion nach den Ansprüchen 1 bis 7, **dadurch gekennzeichnet, dass** der Anteil des Amines und/oder Aminoalkoholes 3 -20 Gew.-%, bezogen auf den Anteil an hydrophobierten Siliciumdioxidpartikeln, beträgt.

9. Dispersion nach den Ansprüchen 1 bis 8, **dadurch gekennzeichnet, dass** sie einen Aminoalkohol enthält.

10. Dispersion nach den Ansprüchen 1 bis 9, **dadurch gekennzeichnet, dass** sie bis zu 10 Gew.-% wenigstens eines organischen Lösungsmittels, ausgenommen N-Methylpyrrolidon enthält.

11. Lackzubereitung enthaltend die Dispersion gemäß der Ansprüche 1 bis 10.

12. Verwendung der Dispersion gemäß der Ansprüche 1 bis 10 als Zusatz zu Hydrofüllern in der Automobilindustrie, als Beschichtungsbestandteil in Can- und Coil-coating-Verfahren, als Additiv in wasserbasierenden UVhärtbaren Formulierungen.

## Claims

1. Aqueous dispersion comprising hydrophobized silicon dioxide particles, **characterized in that** it comprises
a. 50% - 80% by weight of water,
b. 10% - 30% by weight of hydrophobized silicon dioxide particles,
c. 5% - 15% by weight of at least one alcohol alkoxylate of the general formula R¹O((CH₂)ₘO)ₙH, where
R¹ is a branched or unbranched alkyl or alkenyl radical having 10 - 25 C atoms, m is 2 or 3 and n is 10 - 50,
d. 0.5% - 5% by weight of at least one amine and/or amino alcohol having a molecular weight of less than 500 and
e. 0% - 1% by weight of N-methylpyrrolidone,
and the dispersion further comprises
f. 0.1 - 1% by weight, based on the fraction of hydrophobized silicon dioxide particles, of at least one copolymer of the general formula 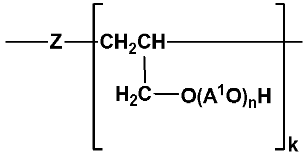 where Z = 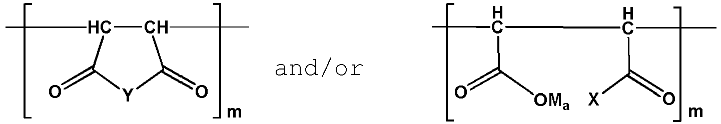 where
M is hydrogen, mono- or divalent metal cation, ammonium ion, organic amine radical,
a is 1, or, if M is a divalent metal cation, a is 0.5
X is likewise -OMₐ or -O-(CₚH₂ₚO)_{q} - R⁴, where
R⁴ is H, aliphatic hydrocarbon radical having 1 to 20 C atoms, cycloaliphatic hydrocarbon radical having 5 to 8 C atoms, optionally substituted aryl radical having 6 to 14 C atoms,
p = 2 - 4, q = 0 - 100, -NHR² and/or -NR²₂, where R² = R¹ or -CO-NH₂
Y is O, NR²
A¹ is ethylene radical, propylene radical, isopropylene radical, butylene radical,
m is 10 - 30, n is 0 - 50, k is 10 - 30, and the sum m+k is in the range of 20 - 60 and where
g. the dispersion comprises 0.1 - 1.5% by weight of at least one polyethylene glycol and/or polypropylene glycol.
all figures for weight percentages being based on the dispersion.

2. Dispersion according to Claim 1, **characterized in that**
the hydrophobized silicon dioxide particles have a methanol wettability of 30% - 60% by volume.

3. Dispersion according to Claim 1 or 2, **characterized in that**
the hydrophobized silicon dioxide particles are silanized silicon dioxide particles.

4. Dispersion according to Claims 1 to 3,
**characterized in that**
the hydrophobized silicon dioxide particles are of pyrogenic origin.

5. Dispersion according to Claims 1 to 4,
**characterized in that**
the hydrophobized silicon dioxide particles have an average particle size d₅₀ in the dispersion of not more than 300 nm, preferably 100 - 250 nm.

6. Dispersion according to Claims 1 to 5,
**characterized in that**
the fraction of the alcohol alkoxylate of the general formula R¹O((CH₂)ₘO)ₙH is 5% - 20% by weight, preferably 8% - 15% by weight, based in each case on the fraction of hydrophobized silicon dioxide particles.

7. Dispersion according to Claims 1 to 6,
**characterized in that**
in the general formula of the alcohol alkoxylate R¹O((CH₂)ₘO)ₙH,
R¹ is CH₃(CH₂)ₓCH₂O with x = 8 - 18, m = 1 - 4 and n = 15 - 25.

8. Dispersion according to Claims 1 to 7,
**characterized in that**
the fraction of the amine and/or amino alcohol is 3% - 20% by weight, based on the fraction of hydrophobized silicon dioxide particles.

9. Dispersion according to Claims 1 to 8,
**characterized in that** it comprises an amino alcohol.

10. Dispersion according to Claims 1 to 9,
**characterized in that**
it contains up to 10% by weight of at least one organic solvent, with the exception of N-methylpyrrolidone.

11. Paint preparation comprising the dispersion according to Claims 1 to 10.

12. Use of the dispersion according to Claims 1 to 10 as an addition to water-based primer-surfacers in the automotive industry, as a coating constituent in can-coating and coil-coating processes, as an additive in water-based UV-curable formulations.

## Revendications

1. Dispersion aqueuse contenant des particules hydrofugées de dioxyde de silicium, **caractérisée en ce qu'**elle contient
a. 50 - 80 % en poids d'eau;
b. 10 - 30% en poids de particules hydrofugées de dioxyde de silicium;
c. 5 - 15 % en poids d'au moins un alcoxylate d'alcool de la formule générale R¹O((CH₂)ₘO)ₙH, dans laquelle R¹ est un radical alkyle ou alcényle ramifié ou non ramifié avec 10-25 atomes de C, m=2 ou 3 et n=10-50,
d. 0,5 - 5 % en poids d'au moins une amine et/ou un alcool aminé avec un poids moléculaire de moins de 500, et
e. 0 - 1 % en poids de N-méthylpyrrolidone,
et la dispersion contient en outre
f. 0,1 - 1 % en poids, rapportés à la fraction de particules hydrofugées de dioxyde de silicium, d'au moins un copolymère de la formule générale 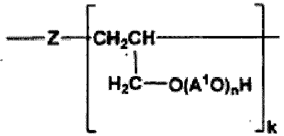 avec Z = 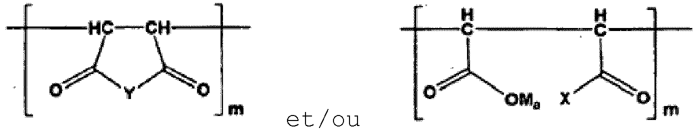 avec
M hydrogène, un cation métallique monovalent ou bivalent, un ion ammonium, un radical aminé organique,
a 1, ou pour le cas où M est un cation métallique bivalent, a = 0,5,
X également -OMₐ ou -O-(CₚH₂ₚO)_{q}-R⁴ avec
R⁴ H, un radical hydrocarboné aliphatique avec 1 à 20 atomes de C, un radical hydrocarboné cycloaliphatique avec 5 à 8 atomes de C, un radical aryle éventuellement substitué avec 6 à 14 atomes de C,
p = 2-4, q = 0-100, -NHR² et/ou -NR²₂ avec R² = R¹ ou -CO-NH₂
Y O, NR²
A¹ radical éthylène, radical propylène, radical isopropylène, radical butylène
m = 10-30, n = 0-50, k = 10-30, dans laquelle la somme m+k est comprise dans la plage de 20 - 60, et dans laquelle
g. la dispersion contient 0,1 - 1,5 % en poids d'au moins un polyéthylène glycol et/ou un polypropylène glycol,
dans laquelle toutes les données fournies en pour cent en poids sont rapportées à la dispersion.

2. Dispersion selon la revendication 1, **caractérisée en ce que** les particules hydrofugées de dioxyde de silicium présentent une mouillabilité par le méthanol de 30 - 60 % en volume.

3. Dispersion selon les revendications 1 ou 2, **caractérisée en ce que** les particules hydrofugées de dioxyde de silicium sont des particules de dioxyde de silicium silanisées.

4. Dispersion selon les revendications 1 à 3, **caractérisée en ce que** les particules hydrofugées de dioxyde de silicium sont d'origine pyrogénique.

5. Dispersion selon les revendications 1 à 4, **caractérisée en ce que** les particules hydrofugées de dioxyde de silicium présentent une taille de particules moyenne d₅₀ dans la dispersion au maximum de 300 nm, de préférence de 100-250 nm.

6. Dispersion selon les revendications 1 à 5, **caractérisée en ce que** la fraction de l'alcoxylate d'alcool de la formule générale R¹O((CH₂)ₘO)ₙH vaut 5 - 20 % en poids, de préférence 8 - 15 % en poids, rapportés chaque fois à la fraction des particules hydrofugées de dioxyde de silicium.

7. Dispersion selon les revendications 1 à 6, **caractérisée en ce que**, dans la formule générale de l'alcoxylate d'alcool R¹O((CH₂)ₘO)ₙH, R¹ signifie CH₃(CH₂)ₓCH₂O avec x = 8-18, m = 1-4 et n =15-25.

8. Dispersion selon les revendications 1 à 7, **caractérisée en ce que** la fraction de l'amine et/ou de l'alcool aminé vaut 3-20 % en poids, rapportée à la fraction des particules hydrofugées de dioxyde de silicium.

9. Dispersion selon les revendications 1 à 8, **caractérisée en ce qu'**elle contient un alcool aminé.

10. Dispersion selon les revendications 1 à 9, **caractérisée en ce qu'**elle contient jusqu'à 10 % en poids d'au moins un solvant organique, à l'exception du N-méthylpyrrolidone.

11. Préparation pour laque contenant la dispersion selon la revendication 1 à 10.

12. Utilisation de la dispersion selon les revendications 1 à 10 comme ajout à des matières de charge aqueuses dans l'industrie automobile, comme composant de revêtement dans des procédés de revêtement de bobines et de boîtes, comme additif dans des formulations à base d'eau durcissables aux UV.
